# EUROPEAN PATENT SPECIFICATION

(11) **EP 3 509 006 B1**
(45) Date of publication and mention of the grant of the patent: **12.01.2022**
(21) Application number: 17846603.3
(22) Date of filing: 30.08.2017
(51) Int. Cl.: G06F 21/62, G09C 1/00, H04L 29/06

(54) **INFORMATION SHARING SYSTEM**
INFORMATIONSTEILUNGSSYSTEM
SYSTÈME DE PARTAGE D'INFORMATIONS

(30) Priority: 30.08.2016 JP 2016167961
(43) Date of publication of application: 10.07.2019
(73) Proprietor: Soramitsu Co., Ltd., Shibuya-ku Tokyo 150-0001 (JP)
(72) Inventor: TAKEMIYA Makoto, Shibuya-ku, Tokyo 150-0001 (JP); OKADA Ryu, Shibuya-ku, Tokyo 150-0001 (JP)
(74) Representative: Regimbeau
(86) International application number: PCT/JP2017/031251
(87) International publication number: WO 2018/043599

(56) References cited:
- WO-A1-2016/007904
- JP-A- 2003 233 683
- JP-A- 2004 213 461
- JP-A- 2016 081 134
- US-A1- 2015 332 029
- US-A1- 2015 372 994

## Description

### Technical Field

The present invention relates to a network system and a program related to information sharing enabling non-disclosure information such as secret information used for one transaction by an individual or a juridical person to be utilized in another transaction, and in particular, relates to technology of utilizing distributed ledger technology to enable secure transmission of the non-disclosure information while keeping technological superiority of the distributed ledger technology.

### Background Art

In the related art, when an individual opens an account in a financial institution such as a bank and a brokerage or purchases a product, a service, or the like from an Internet trader via the Internet, the individual is requested to provide personal information including at least the name, address, date of birth, and the like and a certificate thereof. Abuse of the personal information can cause not only invasion of privacy but also economical loss and many companies therefore handle the personal information as secret information. For example, when an individual X provides, to a bank A, personal information and a certificate thereof showing identity confirmation in order to open an account in the bank A, and then, opens an account also in a bank B, the individual X needs to provide the personal information and the certificate thereof in a similar manner. Accordingly, it takes time and effort for the individual to do identity verification procedures for each of the financial institutions.

### Prior art Documents

Patent document 1: JP Pat No. 5858507 describes a virtual currency management program.

Document US 2015/0372994A1 concerns a method, in which a cryptographic proxy service may be provided. Upon determining that data associated with a network destination comprises at least some sensitive data, a cryptographic service may provide a security certificate associated with the network destination. The plurality of data may be encrypted according to the security certificate associated with the network destination and provided to the cryptographic service for re-encryption and transmission to the network destination. Document US 2015/332029A1 concerns a system and method for establishing and monetizing trusted identities in cyberspace relying upon user opt in. Users request to attain secure IDs by accessing parties that will rely on secure IDs to complete a transaction, for example merchants and service providers (relying parties). The relying parties (RPs) communicate with identity service providers and attribute providers via an Attribute Exchange Network (AXN) in order to obtain verified attributes associated with an entity (end user or user) that wishes to conduct business with the relying party. The relying party makes requests for verified attributes that are important to consummating business transactions for the relying party. Users are informed of requests for attributes on behalf of relying parties and users have the option to verify attributes, and add new attributes that may be useful or required for conducting business with relying parties.

### Summary of Invention

### Problem to be solved by the Invention

In the above-described example, when the personal information and the like that the individual has provided in the identity verification procedures in the bank A can be utilized in the bank B without performing the identity verification procedures as troublesome tasks for the individual each time, the procedures are required only once, thereby improving efficiency. However, regardless of natural wide-spreading of distribution of products and services via a network in daily life with recent expansion of network infrastructures, handling of the personal information and the like involved in the identity verification procedures have not been changed irrelevantly to development of a digital society.

A great reason for the above-described situation is as follows. That is, the financial institutions have to handle the pieces of personal information with the uttermost care because they receive important assets such as deposits and securities, and consider that the identity verification procedures are essential for careful handling even when the individuals feel some inconveniences in opening of accounts.

Identity confirmation becomes strict to prevent illegal use in advance. That is to say, the Financial Services Agency issued notification to the financial institutions to prevent unidentifiable accounts correlated with crime syndicates, terrorist organizations, and the like from being utilized for illegal money laundering by checking whether individuals or companies that really exist try to open accounts. When the financial institution does not request, from the individual, necessary paper procedures and the like in opening of a new account, which is so-called know your customer (KYC), to thereby cause damage due to the illegal money laundering, the financial institution can be punished for legal violation. The KYC is strictly applied in financial institutions of Europe and America, in particular. It takes several weeks before services can be used or account opening is rejected depending on cases.

As another reason why the financial institutions request the identity verification procedures, perfection of network communication is not guaranteed. When a certain financial institution freely makes data communication with another financial institution via a network, it is needless to say that important personal information can be output to the network only with ensuring of high security causing no problem even if data is stolen on the way of a communication route. No matter how robust a network configuration is considered to be constructed, nobody can guarantee that intentional or negligent data outflow to network communication, alteration and leakage of data for the purpose of illegal use are prevented 100% for a long period of time. It should be rather supposed that alternation, leakage, and the like are inevitable in transmission and reception of information using the network. The financial institutions and the like are thereby obliged to be extremely careful for distribution of the pieces of important personal information by network communication.

Even when the pieces of personal information can be transferred by network communication with high security, there are demands for avoiding specification of transmission sources and reception destinations of pieces of information in specific industries. Revealing the source and/or the destination of information may cause any troubles in deals, abuse the source and/or the destination, and make a risk for taking responsibility. On the other hand, as discussed in future examination topics of the personal information protection law in Japan and the like, there are also needs that the destination based on the sources is identified, and vice versa, while keeping a concealed state when requested by audit institutions, police, or the like.

Further, systems in any financial institutions and any vendors via the Internet are not constructed on the assumption that the pieces of personal information are shared, and therefore employ different methods for management of and access to the pieces of personal information in databases, flat files and other data storage systems. Accordingly, when the financial institutions are tried to be connected via a network, in normal cases, it is extremely difficult to consolidate the financial institutions without causing disadvantages in the past enormous transactions executed in the systems. Actually, when a plurality of banks undergo business integration, they prepare for integration of bank information systems investing significant time and financial efforts.

Recently, the distributed ledger technology (DLT) has attracted attention in different domains, including finance. Although there are different definitions of the DLT, for the purpose of this application DLT can be classified as: based on, as one indicator, whether a person who approves a ledger is an arbitrary node terminal connected to a network or a limited node terminal (Permissionless/Permissioned).

A typical example of the DLT that makes pieces of data public, in particular, in public permissionless transactions is blockchain for crypto currency (Bitcoin) as described in Patent Literature 1. By contrast, mechanisms which are called "Ripple TM" and "HyperledgerTM" are targeted on permissioned transactions while network participation qualified persons (in particular, data validators), persons who issue transactions, and persons who read data from an application programming interface (API) are limited to trusted node terminals. As for them, refer to the following. https://ripple.com/files/ripple_consensus_whitepaper.pdf and http://www.linuxfoundation.org/news-media/announcements/2016/02/linux-foundation-s-hyperledger-project-announces-30-founding.

One of characteristics of the DLT is that validity of transactions and actions are determined based on a decentralized peer-to-peer (P2P) network without depending on specific centralized verification approach. The DLT employs decentralized management configuration. That is, a specific server does not individually manage a ledger that persist transactions and the like but each of node manages the same ledger. A new transaction is recognized to be a correct transaction that will be added to the ledgers of all nodes only when the transaction is recognized to be consistent with all ledgers. For example, even if a certain node is attacked and an unauthorized person alters the distributed ledger that the node holds, the altered transaction is rejected as it does not match with the ledgers of the other nodes participating in a validator group on a network. When agreement by equal to or more than the constant number of nodes participating in the validator group on the network is not obtained, the distributed ledgers lack integrity and the transaction is not recorded as correct data. The P2P network connection among the nodes is employed to achieve distribution of security management and improved reliability.

Thus, the DLT requires nodes to holds data that is completely the same throughout a network but it is flexible to any change for local circumstances in the respective nodes. For example, the DLT does not require any changes about system configurations and transaction processing procedures and contents. Accordingly, as a method for achieving distribution of security management and improvement in reliability while keeping independence of the nodes, the DLT has attracted attentions as one of excellent future technologies.

An object of the present invention is to solve the above-mentioned problems related to handling of information provided from an individual or an organization to be shared via a network safely and reliably without disclosing part or complete information.

### Solution to Problems

A first subject matter of the invention is a method according to claim 1. Claims 2-5 concern embodiments of the method. A second subject matter of the invention is a system according to claim 6. Claims 7-9 concern embodiments of the system. A third subject matter of the invention is a device according to claim 10. Claims 11-13 concern embodiments of the device. A fourth subject matter of the invention is a computer program according to claim 14. For achieving the object of the present invention, a computer program according to the present technology is directed to a computer program comprising one or more instructions, which when executed by a plurality of computers connected to a network, for sharing at least part of user information between a first device and a second device, the first device having the user information and the second device not having the user information, the instructions cause: the first device connected to the network to output coded data associated with the user information or data storage location of the user information to the network, wherein the coded data is encrypted with a first public key corresponding to a first private key for the user information, wherein the first private key is stored or managed in the first device; each device of the plurality of devices to receive the coded data through the network to store in the memory of the each device, so that the same coded data is stored among the plurality of devices; the second device connected to the network to output a request for acquiring data from the network, wherein the request is provided toward the plurality of devices and comprises a second public key corresponding to a second private key for the user information, and wherein the second private key is stored or managed in the second device; in response to the request for acquiring data, the first device to decrypt the coded data with the first private key and subsequently outputting a second coded data associated with the user information or the data storage location of the user information to the network, wherein the second coded data is encrypted with the second public key included in the request for acquiring data; each device of the plurality of devices to store the second coded data in its own memory, so that the same second coded data is stored among the plurality of devices; and the second device to decrypt the second coded data with the second private key to get the user information or the data storage location of the user information.

A computer program according to the present technology is directed to a computer program further comprising at the each device of the plurality of devices, performing a predetermined operation using data stored in its own memory and new coded data to be stored which is associated with the user information before storing the coded data or the second corded data in its own memory; and additionally storing the coded data or the second corded data when a value based on the operation exceeds a predetermined number or rate.

A computer program according to the present technology is directed to a computer program further comprising when a request for acquiring data is outputted, at least one device of the plurality of devices conforming an agreement of a purveyor of the user information to a receipt of the user information at the second device, wherein the user information is allowed to encrypt with the second public key only if the agreement is confirmed. Also, A computer program according to the present technology is directed to a computer program further comprising storing at least one of the first and second public keys and the agreement along with the coded data or the second coded data in the memory of the each device of the plurality of devices.

A computer program according to the present technology is directed to a computer program further comprising in response to the request for acquiring data from the second device, when the first device decrypts the data with the second public key, the first device directly decrypts plane data of the user information stored in the first device instead of decrypting the coded data with the first private key.

According to the aspect of the present invention, when a certain computer (second computer) outputs a request for user information to a network, another computer (first computer) that computer has encrypted the user information using a public key forming a key pair with a private key that the certain computer (second computer) holds or manages and outputs the encrypted data to the network. The certain computer (second computer) that has requested the user information can thereby obtain the desired user information by decrypting the encrypted data using its own private key that the user protects as a private key. In the proposed solution, the encrypted data of the user information is stored on each of a plurality of computers connected to the network as a transaction validator group. The group of computers (nodes) validating transactions ensures correct sequence of transactions in respect to time history and stores encrypted data. Regarding the transaction, preferably, only the proof is stored on the blockchains while the actual data is stored off chain. Accordingly, in a case where the encrypted data on one computer included in the plurality of computers is altered or deleted for the purpose of illegal use or the like, when the altered or deleted encrypted data is not the same as the histories on other computers included in the plurality of computers, it is not recognized to be valid data. An unauthorized person cannot simultaneously change the pieces of encrypted data on all of the plurality of computers practically or virtually, thereby eliminating alteration risk of the encrypted data. The information sharing in the aspect of the present invention can guarantee high security.

In the aspect of the present invention, the plurality of computers on the network make P2P communication. Therefore, fault resistance of avoiding the failure that the overall system is down when some computers are down can be provided. To try to hold the fault resistance and a redundancy configuration in a conventional server/client-type system, the cost is increased and high system construction skill is required. By contrast, with the aspect of the present invention, standard specification of the P2P DLT under the assumption that all of the plurality of computers (or computers whose number is equal to or higher than a predetermined ratio) connected to the network as the validator group hold the same histories is implemented, thereby constructing the system at lower costs. As a result, an information sharing system operating in the 24/7 mode can be implemented.

### Brief Description of Drawings

FIG. 1A is a diagram illustrating a relation among nodes when an information sharing method according to the present invention is actually realized.
FIG. 1B is a diagram illustrating an example when the information sharing method according to the present invention is realized by a relation among nodes, which is different from that in FIG. 1A.
FIG. 1C is a diagram illustrating an example when the information sharing method according to the present invention is realized by a relation among nodes, which is different from those in FIG. 1A and FIG. 1B.
FIG. 2 is a diagram illustrating information transfer when a user tries to open an account in a bank A having a node Y(1).
FIG. 3 is a diagram illustrating the information transfer in FIG. 2 by a flowchart.
FIG. 4 is a diagram illustrating information transfer when the user tries to open an account in a bank B having a node Y(2).
FIG. 5 is a flowchart illustrating flow of processing that is performed when the user tries to open the account in the bank B having the node Y(2).
FIG. 6 is an example illustrating encrypted data of personal information.
FIG. 7 is a flowchart illustrating processing procedures of agreement formation.
FIGS. 8A and 8B are diagrams illustrating an example of contents of pieces of transaction data stored in a distributed manner and data structures in the form of blockchain.

### Description of Embodiments

An information sharing system executing processing defined in an information sharing method or a program thereof according to the present invention will be described with reference to the drawings. In the following embodiments, "user information" in the scope of the claims corresponds to personal information such as the address and name, and the case in which the personal information is shared among financial institutions when an individual opens accounts in the financial institutions is described as an example.

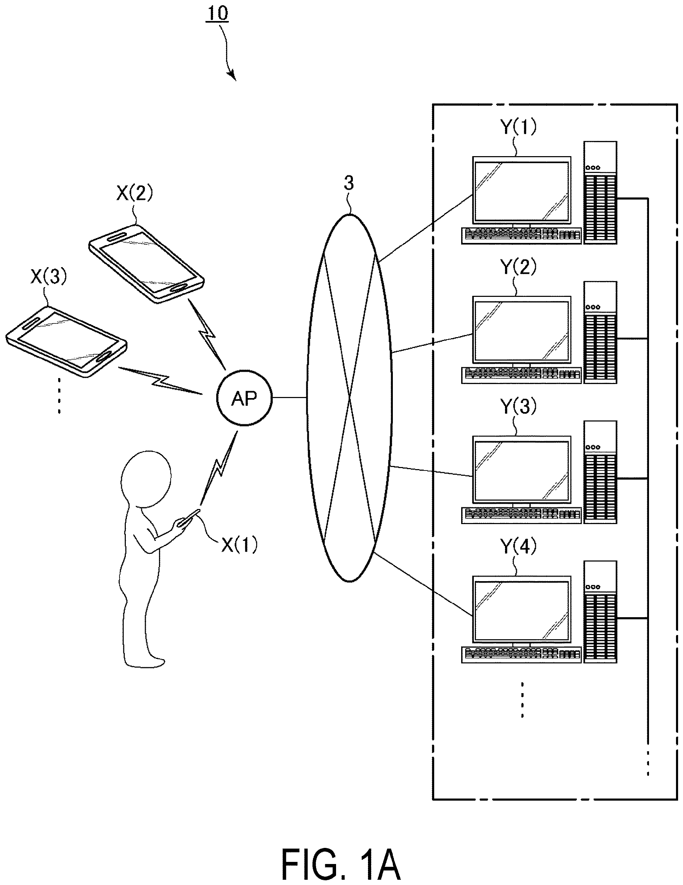

FIGS. 1A to 1C indicate that the configuration of the information sharing system is realized in a plurality of variations.

FIG. 1A illustrates the case in which nodes Y(1) to Y(N) of a plurality of financial institutions are connected to a network 3 such as the Internet and the nodes Y(1) to Y(N) configure "a plurality of computers" in the scope of the claims. Accordingly, P2P distributed ledger technology (DLT) is embodied among the nodes Y(1) to Y(N). Nodes surrounded by an alternate long and short dash line in FIGS. 1A to 1C indicate "a plurality of computers" in the scope of the claims.

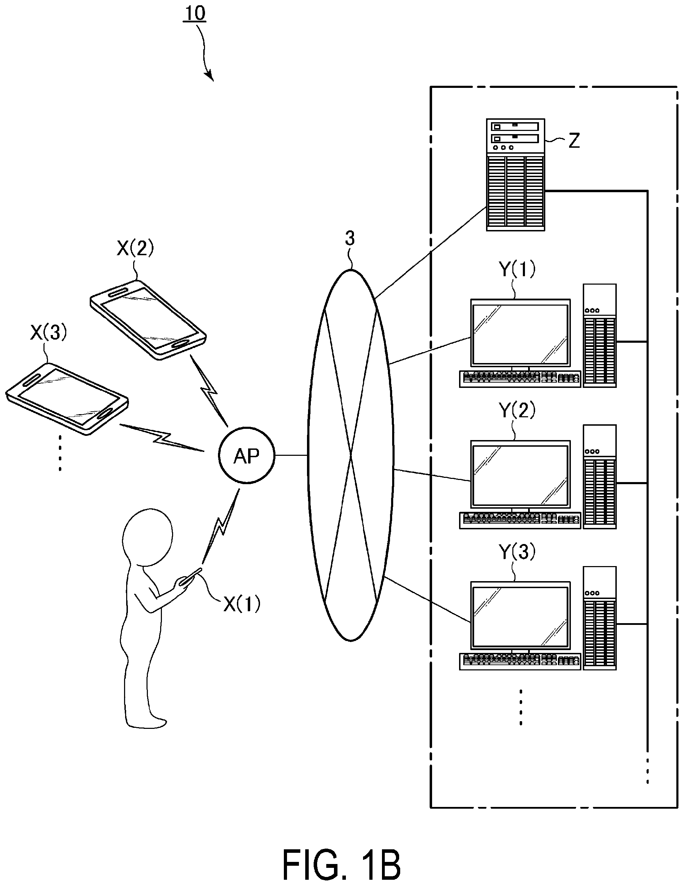

FIG. 1B illustrates the case in which the nodes Y(1) to Y(N) of the plurality of financial institutions and a node Z(1) of a third party that is not included in the financial institutions (for example, an organization supervising the financial institutions and the like in order to prevent transfer of crime proceeds, a company providing services according to the present invention, or the like) configure "a plurality of computers" in the scope of the claims. Accordingly, the P2P DLT is embodied among the nodes Y(1) to Y(N) and the node Z(1). The network configuration illustrated in FIG. 1B have characteristics that "a plurality of computers" is configured by the financial institution nodes Y(1) to Y(N) and at least one node Z, and the node Z is not necessarily required to be single. Accordingly, a plurality of nodes Z corresponding to equal to or more than two third-party institutions may be included. The following describes the case in which the one node Z is included.

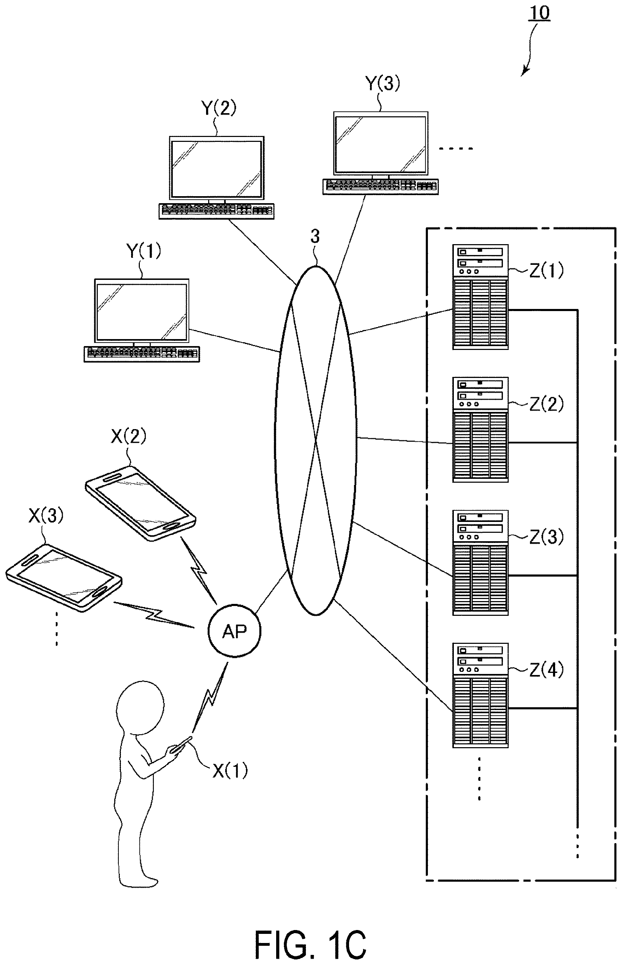

FIG. 1C illustrates the case in which only the plurality of nodes Z described above configures "a plurality of computers" without including the nodes Y(1) to Y(N). The financial institution nodes Y(1) to Y(N) are also connected to the network 3 but the nodes Z(1) to Z(N) embody the P2P DLT.

All of the system configurations in FIGS. 1A to 1C employ the P2P network. In such network there is no so-called centralized node controlling the network. It can be said that these system configurations have almost modes in which a consortium with no so-called manager is formed for activities on the network. A predetermined execution program is installed on the nodes Y(1) to Y(N) and the node(s) Z. When the execution program is activated, pieces of processing according to the present invention are executed in each of the nodes. The nodes Y(1) to Y(N) and the node(s) Z are made to be capable of downloading the execution program from a predetermined site via the network or installs the execution program from a compact disc (CD), a universal serial bus (USB) memory, or the like storing therein the execution program.

### First Embodiment

A first embodiment relates to an information sharing system 10 having the system configuration illustrated in FIG. 1B.

It is assumed that the node Y(1) corresponds to a bank A and the node Y(2) corresponds to a bank B. Under this assumption, a mechanism is described in which when a user opens an account in the bank A, and then, tries to open an account also in the bank B, personal information such as the address and name can be transmitted to and shared with the bank B via a network 3 with processing in the node Y(1) of the bank A without requiring the user to directly provide the personal information to the bank B. In the embodiment, a service providing company running the information sharing system 10 corresponds to the node Z. The information sharing system 10 is assumed to involve a mobile node X(1) such as a smart phone or a tablet node because the user of the personal information generally possesses the mobile node X(1) and it makes easy to contact the user even when the user is out. Instead of the mobile node X(1), a well-known computer connected to the network 3 by wire or wirelessly may be the user device.

### Account Opening in Bank A

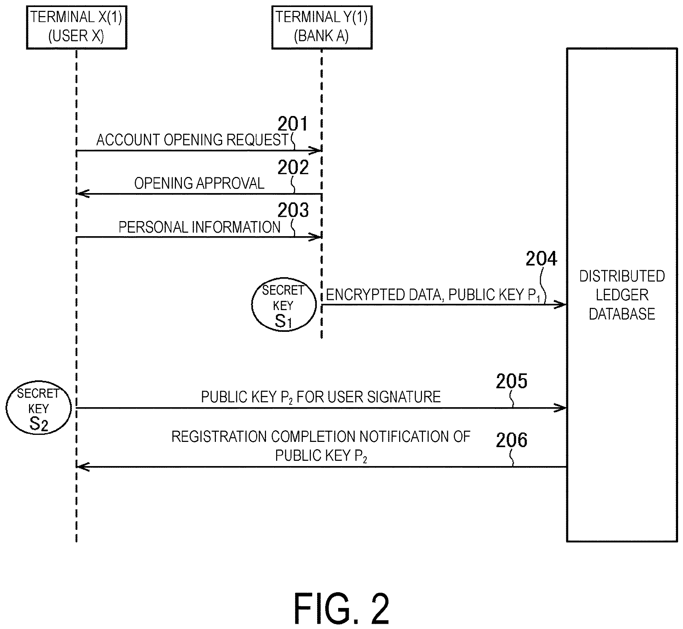

FIG. 2 is a diagram illustrating information transfer when a user X tries to open an account in the bank A before opening the account in the bank B. As illustrated in FIG. 2, when the user X requests the bank A to open the account through the mobile node X(1) (201), the node Y(1) of the bank A permits the opening and requests provision of personal information from the user (202). The personal information includes pieces of information such as the name, address, date of birth, and identity confirmation documents (driver's license, individual number card, health insurance card, and the like). When the user X transmits the personal information to the node Y(1) (203), the node Y(1) opens the user's account in a case where it is determined that requirements for account opening are satisfied in accordance with the predetermined procedures. Examples of the requirements include matching of the name, address, and the like with contents described in the identity confirmation documents, matching of the described address with the place of residence, and a pledge form of declaration of no association with transactions with anti-social forces.

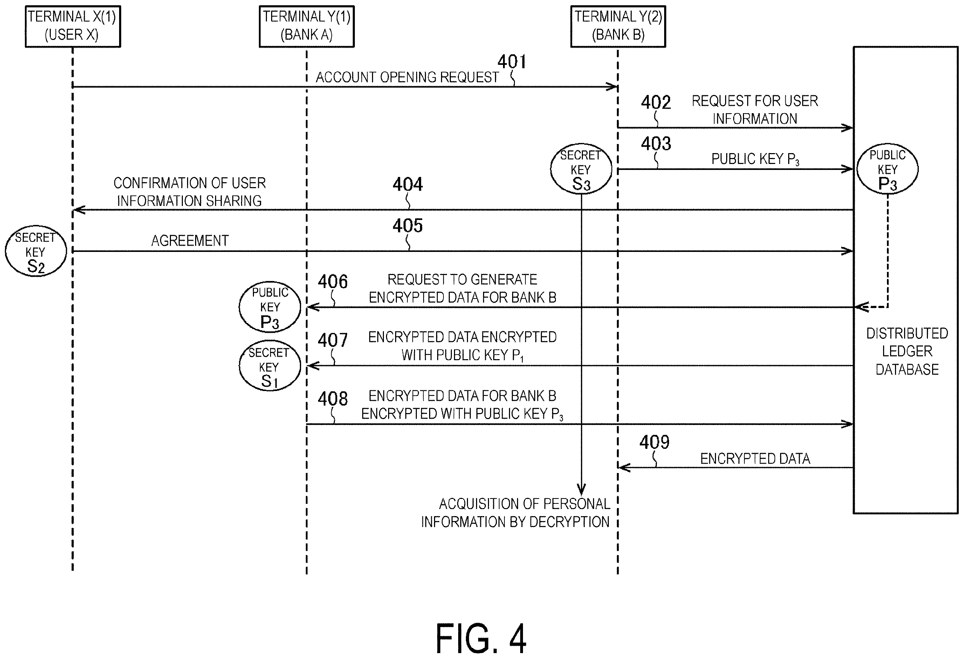

When the node Y(1) creates a key pair of a private key (S1) and a public key (P1) for the opened account and generates encrypted data by encrypting the personal information of the user X by using the public key (P1), it outputs the encrypted data and the public key (P1) to the network 3. The nodes Y(2) to Y(N) and the node Z other than the node Y(1), which are connected to the network 3, receive the encrypted data of the personal information of the user X and the public key (P1), which have been output to the network 3. As will be described later, when group agreement is obtained by an agreement formation process, the nodes Y(2) to Y(N) and the node Z store the encrypted data in association with the public key (P1) in storage media that they manage (204). Output of the data to the network 3 in the present embodiment indicates that the data is transferred to a distributed ledger database illustrated in FIG. 2, that is, a state in which the nodes Y and the node Z can receive the data to be stored in their own storage media is made (the same holds true for FIG. 4).

In order that the node Y(1) participates in the information sharing system 10 and becomes a member of a validator group (that is, "a plurality of computers" in the scope of the claims) on the network, the node Y(1) may use, as the public key (P1) and the private key (S1), one pair of a plurality of pairs of public keys and private keys in the opening of the account for the user X when the plurality of pairs has been set in advance by the validator group. The key pair for the user X is not limited to one pair, and one user can have a plurality of key pairs. When the node Z stores and manages the public keys of the nodes Y(i) (i is 1, 2, and the like), the node Y(1) may receive the public key (P1) from the node Z. In this case, the node Z may not only store and manage the public keys in its own storage medium but also perform cloud management of data when a cloud service can be utilized.

Importantly, the encrypted data and the public key (P1) are stored in each of the node Z, and the node Y(1), the node Y(2), the node Y(3), and the like of the banks. That the data and the public keys are stored in one of the nodes indicates that they are stored in all of these nodes or stored in the nodes whose number is equal to or higher than a predetermined ratio at the given time T1(for example, a ratio of 90% or the like that can be considered to be equal to substantially all of them in consideration of some nodes which at time T1 cannot execute the storage processing due to various circumstances). As described above, in the case of the first embodiment, the nodes Y(1) to Y(N) and the node Z embody the P2P DLT, so that the storage processing in the node Y(1), the node Y(2), the node Y(3), and the like and the node Z is performed. In this case, as details will be described later, each of the node Y(1), the node Y(2), the node Y(3), and the like and the node Z needs to store completely the same information or data.

Next, processing of setting a key pair consisting of a public and private key that are required for authenticating the mobile node X(1) of the user by the nodes Y of the respective banks will be described. First, the mobile node X(1) is made to download a predetermined application or the like. When the downloaded application or the like is registered in the mobile node X(1), the application or the like issues at least one key pair (S2, P2) of a private key (S2) and a public key (P2) corresponding to the private key (S2), which are used for user signature. Thereafter, when the mobile node X(1) outputs the public key (P2) to the network 3, the node Y(1), the node Y(2), the node Y(3), and the like and the node Z receive the public key (P2) for the user signature and register it in their own storage media in association with the encrypted data (205). The node Z transmits, to the mobile node X(1), a registration completion notification indicating that the public key (P2) is used as information for uniquely identifying the mobile node X(1), that is, the user X (206). When the user of the mobile node X(1) has opened no account before, it is sufficient that a first financial institution performs individual authentication for authentication of the mobile node X(1). When the user has opened his (her) account in other financial institutions and the individual authentication has been performed thereby, any of a plurality of financial institutions that has performed the individual authentication may authenticate the mobile node X(1).

The private key (S2) is stored in a memory of the mobile node X(1) and may also be stored in an identification (ID) card, a subscriber identity module (SIM) card, or the like.

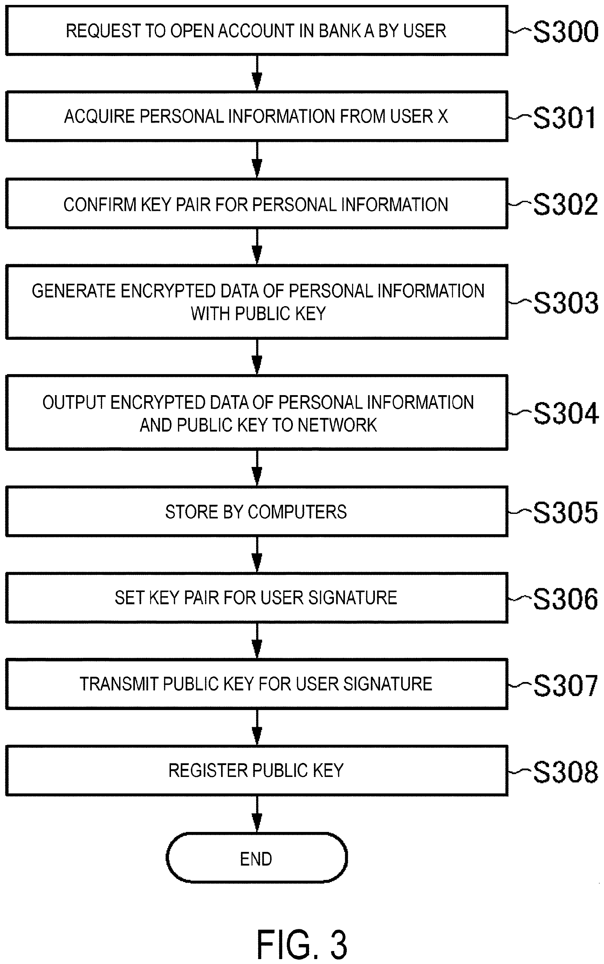

FIG. 3 is a diagram illustrating processing that is performed in the above-described information transfer by a flowchart.

Flow of the processing is checked again with reference to FIG. 3. When the user X requests the node Y(1) of the bank A to open an account by using the mobile node X(1) (step S300), the personal information of the user X that has been input through the mobile node X(1) is provided to the node Y(1) (step S301). The node Y(1) checks at least one key pair (public key P1, private key S1) related to the personal information (that is, the user X himself (herself)) (step S302) and encrypts the personal information by using the public key P1 (step S303). It should be noted that, as the encryption algorithm, any encryption algorithm can be applied and it is not particularly limited.

The node Y(1) outputs the encrypted data of the personal information and the public key (P1) used for the encryption to the network 3 (step S304). Accordingly, the personal information itself (that is not encrypted) of the user X does not flow out to the network 3. The node Y(1) converts the personal information from the user X into "encrypted data". Based on a result of processing of determining whether the encrypted data is the "non-tampered" data being worthy of storage, each of the node Y(1), the node Y(2), the node Y(3), and the like and the node Z stores the encrypted data of the personal information on the network 3 in its own storage medium when group agreement is obtained in that the encrypted data is not tampered (step S305). It is desired that the encrypted data of the personal information is stored in association with the public key (P1). The group agreement processing of determining whether the encrypted data is the "non-tampered" data being worthy of storage will be described in detail later.

In the present embodiment, the encrypted data of the personal information is output to the network 3 and is stored in the storage media of the nodes Y and the node Z. The encrypted data itself is however not necessarily required to be stored. Instead of the encrypted data of the personal information, information about a link destination (for example, URI for accessing a storage region) in which the encrypted data is stored or specific address information may be encrypted and stored in the storage media of the nodes. When the encrypted data itself is not stored, space saving of the storage media is achieved.

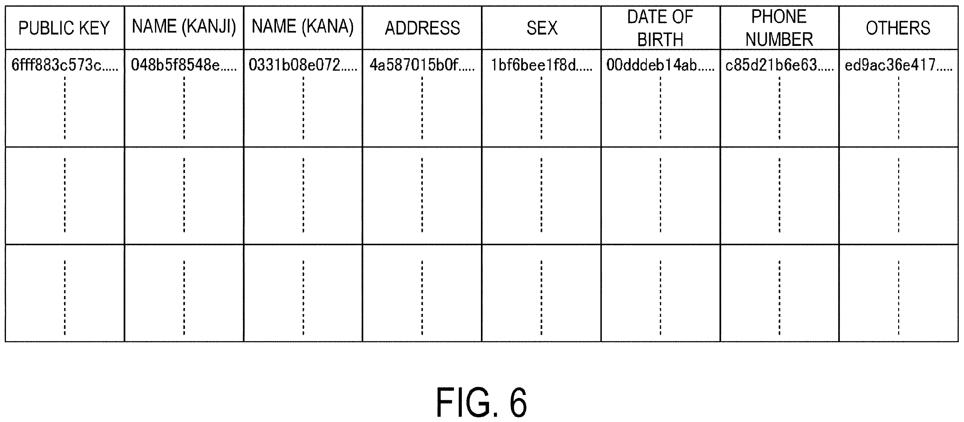

FIG. 6 illustrates an example of the encrypted data of the personal information that is stored in the storage media of the node Y(1), the node Y(2), the node Y(3), and the like and the node Z. Additionally, pieces of encrypted data related to risk information, credit information, and any digital asset may be stored together.

As is obvious from FIG. 6, data is stored in an encrypted state in the storage units of the node Y(1) and the like, and therefore the content thereof cannot be revealed. For example, the name of the user X is "53F83EA7". Even the node Y(2), the node Y(3), and the like and the node Z as "a plurality of computers" except the node Y(1) cannot specify a person to which the personal information corresponds and contents of the information because they do not know the private key S1.

The financial institutions are extremely careful for storage of the pieces of personal information in a state in which the pieces of personal information are accessible via a public network such as the Internet, and are therefore dismissive of storage of the pieces of personal information in a mode in which they can be easily recognized by anybody. As for this point, in the present embodiment, data is stored in the encrypted form. Therefore, even if the encrypted data related to the personal information, the related link information, or the like flows out, the personal information is not deciphered by persons who hold no private key and the security is ensured.

The personal information of the user X is managed in the encrypted state by performing processing as described in step S305. In the first embodiment, processing of setting a key for authenticating validity of the user X himself (herself) is subsequently executed in order to prevent impersonation. First, at least one of the node Y(1), the node Y(2), the node Y(3), and the like and the node Z as "a plurality of computers" (in this example, the one computer is assumed to be the node Z) prompts the user X to download and install a mobile application. The mobile application installed on the node X(1) generates the necessary key pair for user X. The process is supported by the predetermined message (for example, "a key for electronic signature needs to be set for individual authentication. Please access the following site or application and download a key setting application"). The user X registers the application in his (her) mobile node X(1) in accordance with the message and causes at least one key pair (public key P2, private key S2) to be issued (step S306). The user X stores the private key S2 in the mobile node X(1) and returns the public key P2 to the node Z (step S307). Alternatively, the source of the mobile application may store the private key for the user. The node Z registers the transmitted public key P2 in an association manner in, for example, a table format so as to indicate that the public key P2 is the public key of the user X (step S308). The node Z may transmit the public key P2 of the user X to the node Y(1), the node Y(2), the node Y(3), and the like in order to share it and they store the public key P2 with table management as in the node Z or in management modes appropriate for the respective nodes.

The processing parts for setting and registering the user authentication key pair at steps S306 to S308 are not necessarily required to be executed simultaneously with opening of the account in the bank A as in the present embodiment. There arises no problem even if the user downloads the predetermined application and executes the processing that generates at least one key pair (public key P2, private key S2) to be issued when user agreement is required in the account opening in another bank B as will be described later.

### Account Opening in Bank B

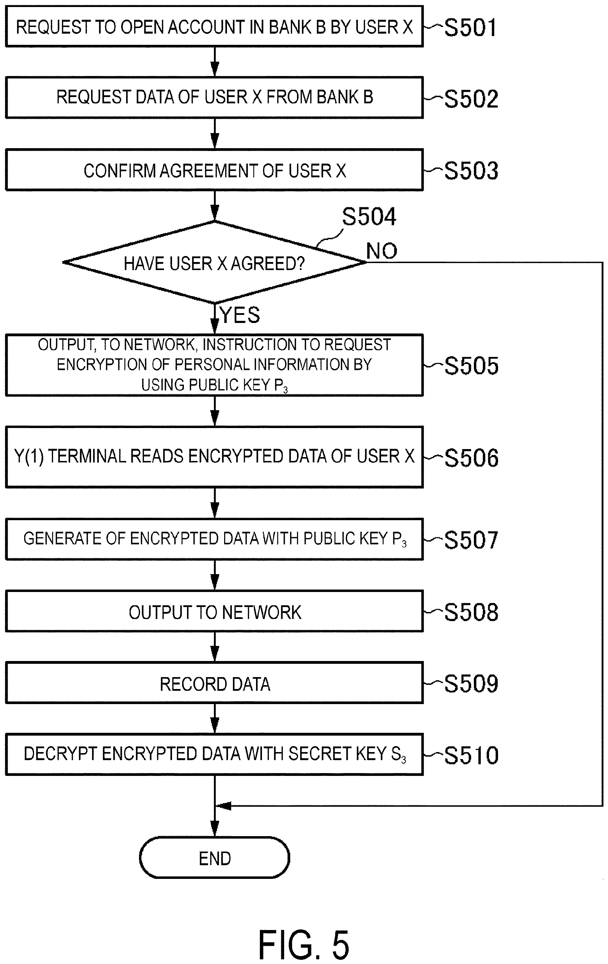

Next, FIG. 4 illustrates information transfer when the user X tries to open the account also in the bank B differing from the bank A and FIG. 5 illustrates a flowchart thereof. It is assumed that the account has been opened in the bank A prior to user request to open an account in the bank B, and the encrypted data related to the personal information of the user X or the related link information has been stored in the storage media of the node Y(1), the node Y(2), the node Y(3), and the like and the node Z with the data transfer and the processing procedures described with reference to FIGS. 2 and 3.

In the related diagram, when the user X requests to open an account in the bank B, the bank B requires the user X to provide the personal information similarly to the case in the bank A. Unlike in the case of the present invention when the user needs to provide the same information once again to the bank B, the personal information of the user X that the bank B needs for opening the account is provided to the bank B in cooperation with the bank A to which the personal information has been provided by the user when opening the account with bank A. To be specific, the node Y(2) of the bank B that has received the account opening request from the user X outputs an acquisition request of the personal information of the user X to the network 3 (402 in FIG. 4 and step S502 in FIG. 5). In this case, information enabling specification of the user X is encrypted and the name of the user X is, for example, "53F83EA7" as described above. The acquisition request of the personal information includes a public key (P3) forming a pair with a private key (S3) that is necessary for the node Y(2) to decipher the encrypted data of the personal information of the user X (403 in FIG. 4).

In response to the acquisition request of the personal information of the user X, which has been output to the network 3, at least one of the node Y(1), the node Y(2), the node Y(3), and the like and the node Z (in this example, the one computer is assumed to be the node Z) tries to obtain, from the user X, agreement whether the personal information can be provided to the bank B (404 in FIG. 4 and step S503 in FIG. 5). Instead of the node Z, any one of the node Y(1), the node Y(2), the node Y(3), and the like may try to obtain the agreement.

Contact with the user X is made by sending a confirmation request to the mobile node X(1) for direct confirmation to the user X or transmitting a confirmation mail to the mobile node X(1) under keeping the reliable and secure circumstance. Alternatively, a method may be employed in which the user X is caused to read a QR code (trade name) or the like for an application screen with an application of the mobile node X(1) and transmit the confirmation when the user X requests to open the account on the node Y(2).

User X agrees to share the personal information using electronic authentication where the approval to share the information is signed with the private key (S2). To be specific, for example, the node Z transmits a random numerical value having an arbitrary length to the mobile node X(1) of the user X, and the user receives it and creates an electronic signature using the random numerical value with the private key (S2).

The node Z verifies the validity of the electronic signature by using the public key (P2) forming the key pair with the private key (S2) because it has registered the public key (P2). When the electronic signature is identical to the original random numerical value, it is proved that the agreement is made by the user X himself (herself) because only the user X who has the private key (S2) can create an encrypted text (electronic signature) which can be verified by the public key (P2) of the user X. In this manner, agreement by an unauthorized person who impersonates the user X is prevented by using the electronic signature.

The node Z checks whether the agreement from the user X has been obtained (405 in FIG. 4 and step S504 in FIG. 5). Actually, for example, it is sufficient that whether "1" as data indicating agreement is set to a value of a predetermined parameter or a flag, or the like is determined. When the agreement is not obtained (in the above-described example, data other than " 1" is set), the personal information is not provided to the bank B (No at step S504 in FIG. 5). The processing of information exchange is stopped in order to prevent the personal information from being transferred without permission by the user X. On the other hand, when the node Z receives the agreement from the user X (Yes at step S504 in FIG. 5), it requests the node Y(1), the node Y(2), the node Y(3), and the like (including the node Z) to encrypt the personal information of the user X for the bank B by using the public key (P3) (406 in FIG. 4 and step S505 in FIG. 5). The node Z transmits the received agreement data to the node Y(1), the node Y(2), the node Y(3), and the like to cause the agreement data to be shared among the node Y(1), the node Y(2), the node Y(3), and the like and the node Z as "a plurality of computers". Each of the node Y(1), the node Y(2), the node Y(3), and the like and the node Z stores the agreement data in its storage medium, so that the nodes hold the same data related to the agreement. The agreement data may be stored in the storage media together with the encrypted data formed by encrypting the personal information or the related link information. The pieces of data can be stored in time series in order from old agreement data or can be stored randomly regardless of the time series.

As described above, all of the node Y(1), the node Y(2), the node Y(3), and the like and the node Z or the nodes whose number is equal to or larger than the predetermined ratio among them share the same encrypted data of the personal information or the like in the opening of the account in the bank A. The node Y(2) stores the encrypted data such as "53F83EA7" representing the data from user X in its own storage medium but has no private key (S1) for decryption. Even when each of the node Y(1), the node Y(2), the node Y(3), and the like and the node Z tries to execute decryption of the encrypted data, only the node Y(1) having the private key (S1) can decrypt the encrypted data related to "53F83EA7". The node Y(2) that has requested to acquire the personal information of the user X does not identify the node Y(1) which enables to decrypt the encrypted data with the private key (S1) and then encrypt it by using the public key (P3). When the node Y(2) makes the acquisition request via the network 3, it waits for output, to the network 3, of the encrypted data created by any of "a plurality of computers" participating in the information sharing system 10.

The node Y(1) reads the encrypted data of "53f83EA7" specified by the acquisition request from its own storage medium (407 in FIG. 4 and step S506 in FIG. 5). The node Y(1) can identify the encrypted data corresponding to the acquisition request comprising the public key (P1) instead of "53f83EA7" because the node Y(1) set or selected the key pair of the public key (P1) and the private key (S1). The node Y(1) enables to retrieve the encrypted data of the user X associated with the public key (P1).

Thereafter, when the node Y(1) decrypts the encrypted data of the user X to the personal information as a plain text by using the private key (S1), it further encrypts the personal information of the user X again using the public key (P3) to form the encrypted data for the bank B (step S507 in FIG. 5). Alternatively, when the personal information of the user X, which is not encrypted, is stored on an internal network of the bank A in order that it is used in the bank A, the node Y(1) encrypts the personal information, which is not encrypted, using the public key (P3).

The node Y(1) does not select the node from "a plurality of computers" participating in the information sharing system 10 that decrypts the encrypted data created using the public key (P3).

The node Y(1) encrypts the personal information of the user X for the bank B by using the public key (P3), which means that when, for example, a bank C also requests the personal information of the user X, encrypted personal data to be provided to the bank B and encrypted personal data to be provided to the bank C are different. Accordingly, a public key (for example, P4) differing from the public key (P3) is used for encryption for the bank C. For the personal information of the same user, different encrypted personal data is generated and transmitted depending on the source that requested the data. Therefore, the security on the network is further enhanced. As described above, the node Y(1) outputs the encrypted data created using the public key (P3) to the network under the condition that it does not identify the bank for which the encrypted data is encrypted (408 in FIG. 4 and S508 in FIG. 5). Each of the node Y(1), the node Y(2), the node Y(3), and the like and the node Z stores the encrypted data in its own storage medium when the group agreement that the encrypted data is "non-tampered" data is obtained based on predetermined arithmetic processing of determining whether the encrypted data is the "non-tampered" data being worthy of storage as the encrypted data of the personal information (step S509 in FIG. 5). The encrypted data of the personal information may be stored in association with the public key (P3) or may be stored together with the above-described agreement data. The node Y(1), the node Y(2), the node Y(3), and the like and the node Z store the same encrypted data of the personal information in their storage media.

The node Y(2) has the private key (S3) forming the pair with the public key (P3). The node Y(2) receives the encrypted personal data (409 in FIG. 4) and decrypts the encrypted personal data by using the stored private key (S3) to thereby acquire the personal information of the user X (step S510 in FIG. 5). The encrypted data that the node Y(1) has encrypted using the public key (P3) may be first transmitted to the node Z and be transferred to the node Y(2), the node Y(3), and the like from the node Z.

Thereafter, when the user X tries to open an account also in the bank C, the node Y(1) and the node Y(2) can create encrypted data for the bank C because the personal information has been provided to the bank A and the bank B. The determination of the bank A or the bank B is depended on case by case. For example, the following manners are considered. Both of the nodes, node Y(1) and node Y(2) create the encrypted data for the bank C. The data from the node which outputs the encrypted data to the network 3 first is used by the bank C. Alternatively, the nodes can be randomly selected, and the selected node is responsible to execute the encryption and provide the encrypted data to the network. When the two nodes Y(1) and Y(2) can both create encrypted data for the bank C, even if one node Y(1) thereof becomes unusable or communication degradation occurs therein, the node Y(2) can immediately act in place of the node that is unavailable and can therefore respond to the request from the bank C rapidly.

With the above-described procedures, the node Y(1) transmits the encrypted data of the personal information to the node Y(2), and the node Y(2) finally acquires encrypted personal information and decrypts it using the corresponding private key. In this case, one of the characteristics of the present invention is that all of "a plurality of computers" participating in the information sharing system hold the same data history that includes the group agreement and the encrypted data. In any traditional systems, an information assignor node and an information assignee node share the encrypted data, and another node that does not request information does not hold the encrypted data. The present invention is using P2P distributed concept with complete matching on the network, which requires all of "a plurality of computers" participating in the information sharing system or the nodes whose number is equal to or higher than the predetermined ratio among them to hold data transmission and reception records on the network as a series of records and requires the data transmission and reception records held by them to be the same all the time. This will be described after explanation of a second embodiment and a third embodiment.

Another characteristics of the present invention is that the node that has requested to acquire the personal information acquires the encrypted data via the network without knowing which node has created the encrypted data. Further, the node that creates the encrypted data outputs the encrypted data to the network under the condition that it does not know which node has requested to acquire the personal information. That is to say, the transmission source and the reception destination of the information that is transmitted do not know each other, so that a function as so-called escrow is exerted. Particularly in the financial industry, there are circumstances specific to the financial institutions where the banks as being assignors do not want other banks and the like to know the presence of the account of the user X. On the other hand, the banks as being assignees also do not want to know the destination of information of the user X because of avoiding any troubles. For these circumstances, the information sharing method according to the present invention fulfills the needs for secrecy.

On the other hand, flow of information sharing needs to be checked while anonymity is not allowed as required by law in the case of occurrence of an event or the like related to information leakage or audits of the financial institutions. When the third-party institution such as the node Z is included as in the present embodiment, the history in the storage medium of the node Z can be traced and verified even when the banks and the like reject to provide the information. This matches with the future trend of the personal information protection law that a source and a destination of transfer of the personal information must be known.

### Second Embodiment

An example of a second embodiment is the configuration illustrated in FIG. 1A. The second embodiment is different from the first embodiment in that there is no node Z required. "A plurality of computers" is configured by the node Y(1), the node Y(2), the node Y(3), and the like of the respective banks for P2P distributed recording. In other words, any of the node Y(1), the node Y(2), the node Y(3), and the like of the respective banks plays a role of the node Z present in the first embodiment. It is sufficient that the node Y which plays a role of the node Z is defined as a rule in the execution program installed in each of the nodes Y. The second embodiment is the same as the first embodiment in the other points.

### Third Embodiment

An example of a third embodiment is the configuration illustrated in FIG. 1C. The third embodiment is different from the first embodiment and the second embodiment in that "a plurality of computers" is configured by a plurality of nodes Z (Z(1), Z(2), Z(3), and the like) for P2P distributed recording. The node Y(1), the node Y(2), the node Y(3), and the like of the respective banks are also connected to the network 3 but have only functions as clients. For example, when the bank B issues a request to acquire personal information to the network through the node Y(2), the nodes Z(1), Z(2), Z(3) and the like store a public key and encrypted data. The node Y(2) as a request source simply receives the encrypted data created on the side of the nodes Z.

The configuration in the third embodiment is supposed to be used as a test system for verifying the viability of the present invention, and on the like. When the program installed on the node Y(1), the node Y(2), the node Y(3), and the like of the respective banks in the first embodiment and the second embodiment is updated, the configuration in the third embodiment is useful for finding failures in advance by activating an updated program by using the nodes Z(1), Z(2), Z(3), and the like before actual distribution of the updated program. Further, it can be regarded that the plurality of nodes without including the nodes of the banks form a consortium as a KYC center. When personal information is desired to be acquired without involving the banks directly, it is sufficient that the configuration in the third embodiment with which the personal information is received from the KYC center is employed. The third embodiment is the same as the first embodiment in the other points.

### DLT

The present invention is characterized by information sharing using the DLT and the outline of the DLT is therefore described as follows. It should be noted that contents of the DLT, which are not directly related to the present invention, will be omitted.

Many conventional systems have a centralized configuration using a server as a core and have a mechanism in which a centralized server controls instances and pieces of data on a network.

For example, an accounting system of a financial institution manages the book (ledger) centrally. On the other hand, a distributed ledger management system causes a plurality of nodes participating in a network to have the same book and enables pieces of information to be shared all the time.

In recent years, companies providing the DLT as a solution have appeared. The DLT has common characteristics that nodes (terminals) making P2P network connection store therein pieces of data and the like in a distributed manner but can be considered to be classified into several types. In the specification, as one indicator for classification, whether network participation, data approval, and the like of the nodes are permissionless/permissioned is examined.

The permissionless-type DLT includes Bitcoin as so-called virtual currency. Bitcoin transactions are public and are accessible by anybody. The unspecific number of nodes can participate therein on a network. Bitcoin maintains robustness of the network by causing the unspecific number of nodes to compete calculation under the rule of proof of work (POW).

The permissionless-type DLT includes a narrow sense of blockchain. Definition of the blockchain differs variously depending on eras or persons who use it. For example, in an era when only Bitcoin as the virtual currency is present, the blockchain indicates the blockchain of Bitcoin and is only another expression of Bitcoin. After blockchain implementations other than Bitcoin appear as in these days, the definition of the blockchain extends and becomes ambiguous with contents of the implementations. Herein, the narrow sense of blockchain, which is synonymous with Bitcoin, is included in the permissionless-type DLT.

It would be practically difficult for the financial institutions to use, in a backbone system, a type that does not require the unspecific number of nodes to be trusted (in addition, makes transactions be public) like the permissionless type. The financial institutions rather desire to organize a network by limited trusted financial institutions and construct closed blockchain having transactions and the like which are not externally referred, and therefore intend for the permissioned type. This type has characteristics of a so-called consortium distributed ledger that needs to form a consensus among a plurality of limited participants. Examples of the permissioned-type DLT include HyperLedger.

The permissioned-type DLT further includes Ripple. This type has characteristics that nodes are formed by limited trusted nodes but the distributed ledger itself is public. (See https://ripple.com/files/ripple_consensus_whitepaper.pdf)

Ripple is an electronic book recording accounts and balances, and anybody can browse this book and see all transactions on the Ripple network. A group consensus (agreement) related to change in the book is achieved among the trusted permissioned nodes. Therefore, calculation competition of the proof of work (POW) that is executed for Bitcoin is not needed, and approval is made by mutual agreement among the nodes in the agreement. With this mechanism, Ripple overcomes problems of scalability and power consumption, which are weak points of Bitcoin, and enables settlement for which it takes 10 minutes on average in the case of Bitcoin to be performed for several seconds. Distributed transaction settlement can be performed stably at high speed.

As a DLT type to which the above-described embodiments of the present invention belong is examined, at least trust of the nodes needs to be guaranteed in a mode in which an account is opened in a financial institution. Therefore, the permissioned type of the DLT would be applied to the above-mentioned embodiments.

Whether the ledger itself is made public although the mechanism of the distributed ledger is of the permissioned type might be apparently inadequate for use among the financial institutions unless the special conditions are ensured such as the network protected by VPN. However, in the present invention, the data that is transmitted and received among "a plurality of computers" is not the personal information as readable raw data but the encrypted data formed by performing the encryption processing as described in the first to third embodiments. Accordingly, even when the ledger itself is made public, the personal information itself is not disclosed to the public in an understandable form. The present invention can be applied to the DLT of the type that makes a ledger public like Ripple by combining the DLT and encryption technology. In the case in which the financial institutions share the personal information as in the above-described first to third embodiments, it is more important to achieve a group consensus (agreement) while limiting nodes to only trusted nodes (Permissioned) rather than the viewpoint whether the ledger is made public or private.

The group consensus (agreement) that is achieved among "a plurality of computers" connected to the network will be described. The group consensus (agreement) is based on a so-called well-known Byzantine generals' problem. The Byzantine generals' problem is the problem questioning whether correct agreement can be formed "as a whole group" under a situation where in an arbitrary group of subjects (generals) communicating with each other, one or more subjects (generals) might transmit false information by failure or intentionally. As details are omitted, it is important for the subjects in the group to agree with one conclusion, and agreement in which conclusion of a certain node and conclusion of another node are different from each other is eliminated. All members have to determine the same conclusion (in the case of the present invention, whether the encrypted data or the user agreement is recognized to be correct).

The distributed ledger has the data structure on the premise that a transaction including the encrypted data and the like is subsequent to a previous transaction. When a malicious person plans to perform an illegal action on data in the node Y(1) of a certain bank, he (she) duplicates illegal data or alters storage data during the data load time or the like in consideration of update of a database at the loading timing. If some data is rewritten successfully, rewritten data does not match with a series of transactions in the past, resulting in inconsistency. Accordingly, data validity can be determined based on the data inconsistency, because no illegal data is essentially generated when history data is constructed as a transaction is formed by a series of transactions from the past.

Even if an unauthorized person completely rewrites the database in the node Y(1), the node Y(2), the node Y(3), and the like other than the node Y(1) hold the same encrypted data and the like in their own storage media. Accordingly, when the pieces of encrypted data and the like in the storage media in all of the node Y(1), the node Y(2), the node Y(3), and the like are not successfully rewritten in the same manner, a notification indicating that inconsistent data have been detected.

Each of the nodes Y (and the node Z) participating in the network, that is, "a plurality of computers" in the scope of the claims determines the validity of the above-described data. Only when a conclusion that the data is "valid" is obtained as a result of the consensus voting performed among the network nodes, a new agreement and/or new encrypted data, or the like is added to the ledgers in the storage media of the network nodes. Thus, history data in which new encrypted data and agreement matching with the transactions including the pieces of encrypted data and the like stored in the past are sequentially continuous is formed. In general, when the pieces of encrypted data and the agreements for a predetermined time or a predetermined amount are added, they are grouped into a block of transactions, and then, the block is coupled to another block (so-called blockchain). However, it is not required group transactions into the block. Transactions could be directly recorded in the distributed ledger without being grouped into the block at a predetermined interval.

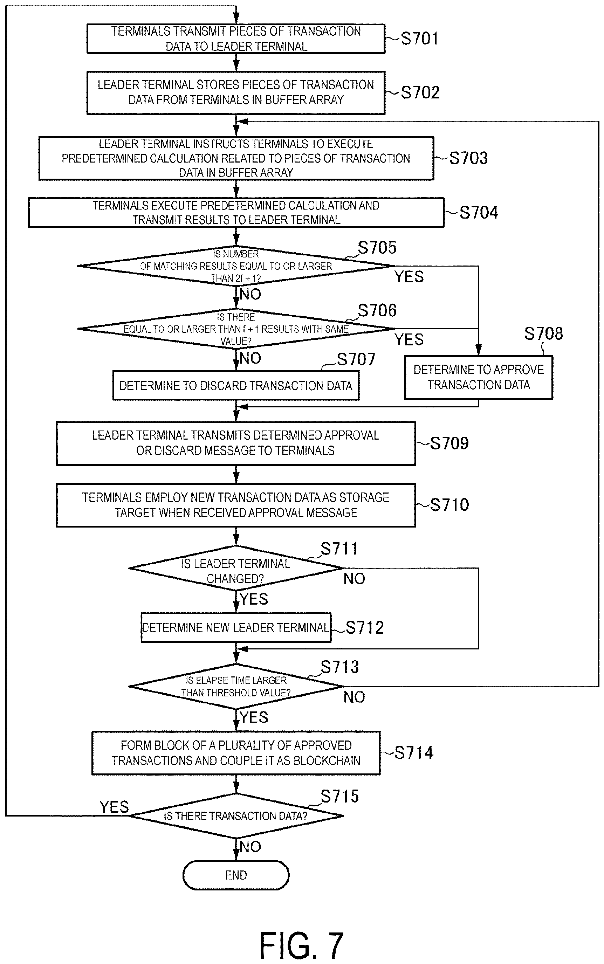

Next, an example of forming the agreement is presented. FIG. 7 is a flowchart illustrating agreement forming procedures using blockchain network consisting of nodes described in the first embodiment.

With the present invention utilizing the DLT, the respective nodes on the decentralized P2P network verify the validity of the transaction without depending on a specific node. A leader node is selected from the nodes and the other nodes follow a conclusion made by the leader node. In this example, it is assumed that the node Z is selected as the leader node.

As indicated by the pieces of processing 406 and 407 in FIG. 4, the node Y(1) receives the public key P3 and the encrypted data. Therefore, the node Y(1) transmits, to the leader node Z, (i) the public key P3 transmitted from a transmission source, (ii) the public key P1 of the node Y(1), and (iii) the encrypted data as transaction data (step S701). In addition, (iv) the agreement data may be included in the transaction data.

The leader node Z stores the transaction data from the node Y(1) in a predetermined buffer array.

The buffer array is formed because the pieces of transaction data are also received from the nodes Y other than the node Y(1). That is to say, although FIG. 4 illustrates only the node Y(1) and the node Y(2) as the bank nodes for the convenience of description, pieces of transaction data similar to that transferred between the node Y(1) and the node Y(2) through the distributed ledger database are actually transferred between other bank nodes Y. The nodes Y other than the node Y(1) transmit the transaction data to the leader node Z. When the leader node Z receives these pieces of transaction data, it stores them in order form in the buffer array (step S702).

Then, at step S703, the leader node Z transmits a message instructing the nodes to execute predetermined operation related to the pieces of transaction data in the buffer array (buf[]). When it is assumed that transaction data about a user X1 is stored in the buffer array buf[1] and transaction data about a user X2 is stored in the buffer array buf[2], the leader node Z instructs the node Y(1), the node Y(2), the node Y(3), and the like to execute operation for verifying the transaction data about the user X1 and instructs the node Y(1), the node Y(2), the node Y(3), and the like to execute operation for verifying the transaction data about the user X2.

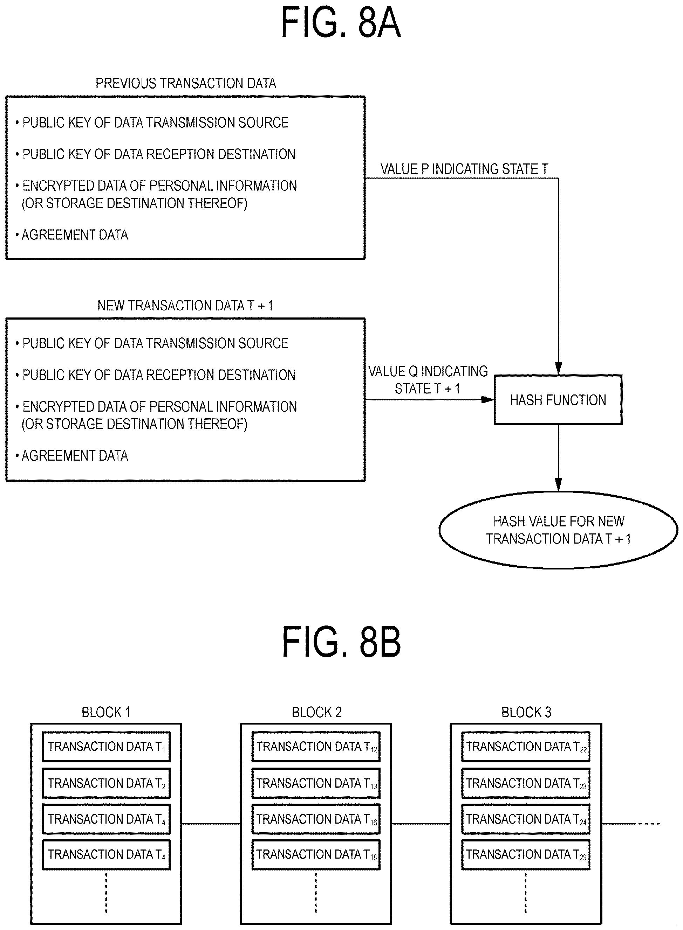

Upon reception of the instructions, each of the node Y(1), the node Y(2), the node Y(3), and the like receives the pieces of transaction data and checks whether it can provisionally store them in its own storage medium (provisional storage means temporary storage because the pieces of received transaction data are finally discarded without being stored in some cases), and then, performs hash calculation. To be specific, as illustrated in FIG. 8A, when storage history just before the transaction data of buf[1] is received is assumed to be a state T, the storage history shifts to a state T + 1 if the transaction data of buf[1] is stored as confirmation data without being discarded. Numerical values representing the state T and the state T + 1 are input to a hash function to calculate a hash value for the new state T + 1.

In the present embodiment, secure hash algorithm (SHA)-3 employing a sponge function that has been already known is used. The sponge function can eliminate the necessity of a complicated compression function by using a large sponge (internal state). Input data is "absorbed" by the sponge with a constant ratio and is "squeezed out" with the same ratio in hash output. To be specific, for example, the internal state is initialized, the input data is divided into r bits as a unit of block replacement, and then, exclusive OR operation (XOR) of the input data of every r bits and the internal state is operated for block replacement. These pieces of processing are repeated, and it is sufficient that n bits at the head of the internal state after final block replacement is a derived hash value. r is always larger than the hash length (n bits), and further block replacement needs not to be performed thereon in a process of "squeezing". Even when the internal state to be held becomes larger, the SHA-3 performance is improved using a high-speed mixing function combined with a simple non-linear operation.

The SHA-3 is not necessarily required to be used and a hash function based on another algorithm may be used.

It is now assumed that storage history just before the reception of buf[1] has been altered in the storage medium of the node Y(2), for example. The state T representing the altered transaction data is not the original state T, and a hash value for a new state T' calculated using the hash function is therefore also a different value from a hash value obtained from the state T with no alteration. Each of the node Y(1), the node Y(2), the node Y(3), and the like transmits the calculated hash value to the leader node Z (step S704). In a similar manner, each of them executes the hash operation for the user X2 and transmits "APPROVE" and a "hash value" to the leader node Z. "APPROVE" is a message for notifying the leader node Z that there are no problems in the node, which means successful reception and provisional storage of the transaction data.

When the leader node Z receives the "APPROVE" messages and the "hash values" as operation results from the equal to or more than predetermined number of nodes Y, it examines whether it received returns from the equal to more than constant number of nodes and the hash values thereof are the same.

Obviously, when the pieces of transaction data stored in the storage media of the respective nodes Y are not altered, the hash values should be the same in principle. The leader node Z itself also calculates the hash value in a similar manner and checks whether the hash value is the same. Some unintended failures such as crashes of the nodes Y, reception failures of the pieces of transaction data from the leader node Z, and return incapability of calculation results might occur. There is also a slight possibility that the node Y can intentionally cause failure by illegal processing or response related to the transaction data received from the leader node Z. For coping with those issues, in the present invention, when it is assumed that the number of nodes of "a plurality of computers" connected to the network 3 is N and the number of nodes that possibly return no response or return incorrect values is f, it is checked whether the "APPROVE" message is received from the equal to or more than 2f + 1 nodes Y. The verification follows the approach described in the Byzantine generals' problem (step S705). When the same hash value is received from the equal to or more than f + 1 nodes Y, the leader node Z approves the transaction data and announces operation to be valid (Yes at step S706 and step S708). f is a value for adjusting approval accuracy and as f is higher, more nodes with the same hash value relative to the total number of the nodes are needed for approval.

In order to prevent approval that is not made based on a constant ratio of the whole group, the leader node Z discards the transaction data when it receives less than 2f + 1 "APPROVE" messages relative to the number of nodes N as "a plurality of computers" (No at step S705 and step S707). Even when the leader node Z receives the equal to or larger than 2f + 1 "APPROVE" messages, if the number of nodes that transmitted the same hash value is smaller than f + 1, the leader node Z discards the transaction data (No at step S706 and step S707).

When the leader node Z determines whether to approve or discard the transaction data, it transmits a message to the respective nodes Y (step S709). Upon reception of the message, the respective nodes Y handles the transaction data that has not been confirmed as data to be stored when the message indicates approval (step S710).

In the present invention, the leader node Z is not necessarily the same node. In some situations, the leader node possibly transmits, to the respective nodes Y, a message indicating that the transaction data is valid intentionally although it should determine that the transaction data is actually invalid, or the leader node is ineligible as the leader node although it does not perform such an intentional operation. When the predetermined number of requests for exchange of the leader due to the excessive time to transmit the message indicating whether the transaction data is valid, or the like, is collected from the nodes Y, a new leader node is selected (step S711). The new leader node may be determined based on various references, for example, by determining it from the nodes Y randomly, employing a rotation system, or selecting the node Y that takes a shortest time to transmit the operation result (step S712). When the leader is thus non-fixed, intentional failures addressed in the Byzantine generals' problem can be solved.

After the predetermined time has elapsed (step S713) and the above-described pieces of processing on the pieces of transaction data in the buffer array are repeatedly being performed, the plurality of pieces of approved transaction data are collectively grouped into a block and the block is coupled to the previous blocks (step S714). A series of data that is thus generated is referred to as so-called blockchain. FIG. 8B illustrates a concept of the pieces of transaction data in the form of the blockchain. Contents in each block basically contain a hash of the previous block and can contain an electronic signature of the leader depending on the algorithm thereof (that is to say, the whole block is hashed and is electronically signed). In the case of no transaction data in the buffer array, the process returns to step S710 and the same processing parts are repeated.

The group consensus (agreement) process described above takes a shorter time than consensus used in the Bitcoin network. Bitcoin network employs a method in which while a specific value related to hash functions in the blocks is being changed, only blocks approved to be correct blocks are found by operation processing by full search or in a round-robin manner. Therefore, Bitcoin network takes about 10 minutes on average to determine whether a new block is added to the blockchain. On the other hand, the group consensus (agreement) process needs no mathematical calculation and is therefore performed every 5 to 10 or less seconds at the present time. Accordingly, the encrypted data and the like that are transmitted to the network can be added to the ledgers of the respective nodes of the banks and the like at high speed.

Further, the series of pieces of data or transactions that are recorded in the distributed ledger serve as evidence for indicating transmission of the personal information by the past history records, and alteration of records can be easily traced later. Therefore, as a function equivalent to a distributed ledger management platform R3 Corda, a system having high transparency, which is preferable for checking of transmission records by an external institution such as a supervising organization like the node Z in the first embodiment, can be constructed.

The information sharing system that is implemented in the financial institutions or the like as described in the above first and second embodiments is the P2P network requiring no central management subject and distributes data recording by a plurality of nodes (nodes). The information sharing system therefore provides fault resistance of avoiding the failure that the overall system is down when some nodes are down, and a 24-hour operating system with no non-operating time is constructed. Further, the system has a data structure with which it is extremely difficult for an unauthenticated person to alter data, thereby constructing a system at low cost with high security even when data communication is made on a public network.

In the above-described embodiments, sharing of the personal information as part of the account opening business process in the financial institutions has been described. The present invention is however not necessarily limited to information sharing between the financial institutions. The range of the present invention covers various fields of medical care, communication, real estate, education, government, logistics, insurance, arbitrary contracts, Internet services, and sharing economy services, for example.

Accordingly, when information is shared without agreement of the user X, information sharing confirmation processing (404 and 405 in FIG. 4, steps S503 and S504 in FIG. 5) can be omitted depending on the fields to which the present invention is applied. In some cases, instead of the group consensus (agreement), generation of blocks by calculation of blockchain-based proof of work (POW) or proof of stake, which is performed for Bitcoin, is adequate. The technique of the present invention can be applied to any type of the DLT.

The technological meaning of the present invention will be exerted when a plurality of institutions or organizations shares information (for example, rights and value records) that can be defined as a digital asset while the information is not limited to the personal information.

The range of the present invention includes a program installed or loaded on a computer by downloading it via various recording media such as an optical disk like a compact disc-read only memory (CD-ROM), a magnetic disk, and a semiconductor memory or via a communication network, and these storage media.

Further, the respective nodes participating in the information sharing system via the network 3 are computers connected to the network such as the Internet and a dedicated line. To be specific, examples of the nodes include a personal computer (PC), a mobile phone, a smart phone, a personal digital assistant (PDA), a tablet, and a wearable node. Examples of the mobile node of the user include a mobile phone, a smart phone, a PDA, a tablet, and a wearable node. The information sharing system is configured by enabling the nodes and the mobile node connected to the network by wires or wirelessly to communicate with one another. Although in the above-described embodiments, the information sharing system is the P2P system, the information sharing system may not necessarily employ the P2P DLT. The information sharing system may be configured as a system cooperating with an application service provider (ASP).

### Reference Signs List

3 Network

## Claims

1. A method for sharing user information between a first device (Y(1)) and a second device (Y(2)) via a plurality of devices (Y(1)-Y(N)) with memory connected to a network (3) using distributed ledger technology, the first device (Y(1)) having the user information and the second device (Y(2)) not having the user information, comprising:
the first device (Y(1)) connected to the network (3) outputting coded data associated with the user information to the network (3), wherein the coded data is encrypted with a first public key (P₁) corresponding to a first private key (S₁) for the user information, wherein the first private key (S₂) is stored or managed in the first device (Y(1)) ;
each device of the plurality of devices (Y(1)-Y(N)) receiving the coded data through the network (3) to store in the memory of the each device, so that the same coded data is stored among the plurality of devices (Y(1)-Y(N));
the second device (Y(2)) connected to the network (3) outputting a request (402) for acquiring data from the network (3), wherein the request (402) is provided toward the plurality of devices (Y(1)-Y(N)) and comprises a second public key (P₃) corresponding to a second private key (S₃) for the user information, and wherein the second private key (S₃) is stored or managed in the second device (Y(2));
in response to the request for acquiring data, the first device (Y(1)) decrypting the coded data with the first private key (S₁) and subsequently outputting a second coded data associated with the user information to the network (3), wherein the second coded data is encrypted with the second public key (P₃) included in the request for acquiring data;
each device of the plurality of devices (Y(1)-Y(N)) storing the second coded data in its own memory, so that the same second coded data is stored among the plurality of devices (Y(1)-Y(N)); and
the second device (Y(2)) decrypting the second coded data with the second private key (S₃) to get the user information.

2. The method of claim 1, wherein at the each device of the plurality of devices (Y(1)-Y(N)),
performing a hash algorithm for validating a chain state of stored data using data stored in its own memory and the second coded data to be stored which is associated with the user information before storing the coded data or the second coded data in its own memory; and
additionally storing the coded data or the second coded data when a conclusion of valid is determined according to a consensus algorithm performed among the plurality of devices.

3. The method of claim 1 or 2, further comprising:
when a request for acquiring data is outputted, at least one device of the plurality of devices (Y(1)-Y(N)) requesting an agreement (405) of a user (X(1)) of the user information to a receipt of the user information at the second device (Y(2)), wherein the first device (Y(1)) is configured to encrypt the user information with the second public key (P₃) only if the agreement is confirmed.

4. The method of claim 3, further comprising:
storing not only the second public key (P₃) but also the agreement with the second coded data in the memory of the each device of the plurality of devices (Y(1)-Y(N)).

5. The method of claim 1, wherein the first device (Y(1)) generates the coded data from locally stored personal user information.

6. A system with a plurality of devices (Y(1)-Y(N)) with memory comprising a first device (Y(1)) and a second device (Y(2)) that are connected to a network (3) for sharing user information between the first device (Y(1)) and the second device (Y(2)) using distributed ledger technology, the first device having the user information and the second device not having the user information, wherein:
the first device (Y(1)) connected to the network (3) configured to output coded data associated with the user information to the network (3), wherein the coded data is encrypted with the first public key (P₁) corresponding to the first private key (S₁) being used to exchange the user information, wherein the first private key (S₁) is stored or managed in the first device (Y(1));
each device of the plurality of devices (Y(1)-Y(N)) configured to receive the coded data through the network (3) to store in the memory of the each device, wherein the same coded data is stored among the plurality of devices (Y(1)-Y(N));
the second device (Y(2)) connected to the network (3) configured to output a request (402) for acquiring data to the network (3), wherein the request (402) is provided toward the plurality of devices (Y(1)-Y(N)) and comprises a second public key (P₃) corresponding to a second private key (S₃) for the user information, and wherein the second private key (S₃) is stored or managed in the second device (Y(2));
in response to the request (402) for acquiring data, the first device (Y(1)) configured to decrypt the coded data with the first private key (S₁) and subsequently outputting a second coded data associated with the user information to the network (3), wherein the second coded data is encrypted with the second public key (S₃) included in the request (402) for acquiring data;
each device of the plurality of devices (Y(1)-Y(N)) is configured to store the second coded data in its own memory, wherein the same second coded data is stored among the plurality of devices (Y(1)-Y(N)); and
the second device (Y(2)) is configured to decrypt the second coded data with the second private key (S₃) to get the user information.

7. The system of claim 6, wherein each device of the plurality of devices (Y(1)-Y(N)) is configured to
perform a hash algorithm for validating a chain state of stored data using data stored in its own memory and the second coded data to be stored which is associated with the user information before storing the coded data or the second coded data in its own memory; and
additionally store the coded data or the second coded data when a conclusion of valid is determined according to a consensus algorithm performed among the plurality of devices.

8. The system of claims 6 or 7, in which at least one device of the plurality of devices is further configured to request an agreement of a user (X(1)) of the user information to a receipt of the user information at the second device (Y(2)) when the request (402) for acquiring data is outputted, wherein the first device (Y(1)) is configured to encrypt the user information with the second public key (P₃) only if the agreement is confirmed.

9. The system of claim 6, wherein the first device (Y(1)) generates the coded data from locally stored personal user information.

10. A first device (Y(1)) for providing user information to a second device (Y(2)) not having the user information via a plurality of devices (Y(1)-Y(N)) with each memory connected to a network (3) using distributed ledger technology, the first device (Y(1)) configured to:
generate encrypted data associated with user information using a first public key (P₁) corresponding to a first private key (S₁) for the user information, wherein the first private key (S₁) is stored or managed in the first device (Y(1));
output the encrypted data to the network (3);
in response to output a request (402) for acquiring data including a second public key (P₃) from the second device (Y(2)) to the network (3) after each device of the plurality of devices (Y(1)-Y(N)) connected to the network (3) storing the encrypted data in its own memory, decrypt the encrypted data with the first private key (S₁), subsequently encrypt the decrypted user information with the second public key (P₃) into a second coded data and output the second coded data, wherein the second public key (P₃) corresponds to a second private key (S₃) stored or managed in the second device (Y(2)).

11. The first device of claim 10, wherein the each device of the plurality of devices (Y(1)-Y(N)) is configured to
perform a hash algorithm for validating a chain state of stored data using data stored in the own memory and the second coded data to be stored which is associated with the user information before storing the encrypted data for the user information in its own memory of the each device; and
additionally store the coded data or the second coded data when a conclusion of valid is determined according to a consensus algorithm performed among the plurality of devices.

12. The first device of claim 10, further comprising:
wherein the first device (Y(1)) is configured to encrypt the user information with the second public key (P₃) only if the agreement is confirmed from at least one device of the plurality of devices (Y(1)-Y(N)).

13. The first device of claim 10, wherein the first device (Y(1)) generates the coded data from locally stored personal user information.

14. A computer program embodied in a computer readable memory or medium that, when executed by a plurality of devices (Y(1)-Y(N)) connected to a network (3), performs the steps in the method of any of claims 1-5.

## Patentansprüche

1. Verfahren zum Teilen von Benutzerinformationen zwischen einer ersten Vorrichtung (Y(1)) und einer zweiten Vorrichtung (Y(2)) über eine Vielzahl von Vorrichtungen (Y(1)-Y(N)) mit Speicher, die mit einem Netzwerk (3) verbunden sind, unter Verwendung von Distributed-Ledger-Technologie, wobei die erste Vorrichtung (Y(1)) die Benutzerinformationen aufweist und die zweite Vorrichtung (Y(2)) die Benutzerinformationen nicht aufweist, das umfasst:
durch die erste Vorrichtung (Y(1)), die mit dem Netzwerk (3) verbunden ist, Ausgeben von codierten Daten, die mit den Benutzerinformationen verbunden sind, an das Netzwerk (3), wobei die codierten Daten mit einem ersten öffentlichen Schlüssel (P₁) verschlüsselt sind, der einem ersten privaten Schlüssel (S₁) für die Benutzerinformationen entspricht, wobei der erste private Schlüssel (S₂) in der ersten Vorrichtung (Y(1)) gespeichert oder verwaltet wird;
durch jede Vorrichtung von der Vielzahl von Vorrichtungen (Y(1)-Y(N)), Empfangen der codierten Daten durch das Netzwerk (3) zum Speichern in dem Speicher von jeder Vorrichtung, derart dass die gleichen codierten Daten unter der Vielzahl von Vorrichtungen (Y(1)-Y(N)) gespeichert werden;
durch die zweite Vorrichtung (Y(2)), die mit dem Netzwerk (3) verbunden ist, Ausgeben einer Anforderung (402) zum Erfassen von Daten von dem Netzwerk (3), wobei die Anforderung (402) der Vielzahl von Vorrichtungen (Y(1)-Y(N)) bereitgestellt wird und einen zweiten öffentlichen Schlüssel (P₃) umfasst, der einem zweiten privaten Schlüssel (S₃) für die Benutzerinformationen entspricht, und wobei der zweite private Schlüssel (S₃) in der zweiten Vorrichtung (Y(2)) gespeichert oder verwaltet wird;
als Reaktion auf die Anforderung zum Erfassen von Daten, durch die erste Vorrichtung (Y(1)), Entschlüsseln der codierten Daten mit dem ersten privaten Schlüssel (S₁) und anschließend Ausgeben zweiter codierter Daten, die mit den Benutzerinformationen verbunden sind, an das Netzwerk (3), wobei die zweiten codierten Daten mit dem zweiten öffentlichen Schlüssel (P₃) verschlüsselt sind, der in der Anforderung zum Erfassen von Daten enthalten ist;
durch jede Vorrichtung von der Vielzahl von Vorrichtungen (Y(1)-Y(N)), Speichern der zweiten codierten Daten in ihrem eigenen Speicher, derart dass die gleichen zweiten codierten Daten unter der Vielzahl von Vorrichtungen (Y(1)-Y(N)) gespeichert werden; und
die zweite Vorrichtung (Y(2)) die zweiten codierten Daten mit dem zweiten privaten Schlüssel (S₃) entschlüsselt, um die Benutzerinformationen zu erhalten.

2. Verfahren nach Anspruch 1, das an jeder Vorrichtung von der Vielzahl von Vorrichtungen (Y(1)-Y(N)) umfasst:
Ausführen eines Hash-Algorithmus zum Validieren eines Kettenzustands von gespeicherten Daten unter Verwendung von in ihrem eigenen Speicher gespeicherten Daten und der zu speichernden zweiten codierten Daten, die mit den Benutzerinformationen verbunden sind, vor dem Speichern der codierten Daten oder der zweiten codierten Daten in ihrem eigenen Speicher; und
zusätzlich Speichern der codierten Daten oder der zweiten codierten Daten, wenn eine Schlussfolgerung gültig gemäß einem Konsensalgorithmus bestimmt wird, der unter der Vielzahl von Vorrichtungen ausgeführt wird.

3. Verfahren nach Anspruch 1 oder 2, das ferner umfasst:
wenn eine Anforderung zum Erfassen von Daten ausgegeben wird, durch mindestens eine Vorrichtung von der Vielzahl von Vorrichtungen (Y(1)-Y(N)), Anfordern einer Zustimmung (405) eines Benutzers (X(1)) der Benutzerinformationen zu einem Empfang der Benutzerinformationen an der zweiten Vorrichtung (Y(2)), wobei die erste Vorrichtung (Y(1)) dazu ausgestaltet ist, die Benutzerinformationen mit dem zweiten öffentlichen Schlüssel (P₃) zu verschlüsseln, nur wenn die Zustimmung bestätigt wird.

4. Verfahren nach Anspruch 3, das ferner umfasst:
Speichern nicht nur des zweiten öffentlichen Schlüssels (P₃), sondern auch der Zustimmung mit den zweiten codierten Daten in dem Speicher von jeder Vorrichtung von der Vielzahl von Vorrichtungen (Y(1)-Y(N)) .

5. Verfahren nach Anspruch 1, wobei die erste Vorrichtung (Y(1)) die codierten Daten aus lokal gespeicherten persönlichen Benutzerinformationen erzeugt.

6. System mit einer Vielzahl von Vorrichtungen (Y(1)-Y(N)) mit Speicher, die eine erste Vorrichtung (Y(1)) und eine zweite Vorrichtung (Y(2)) umfassen, die mit einem Netzwerk (3) zum Teilen von Benutzerinformationen zwischen der ersten Vorrichtung (Y(1)) und der zweiten Vorrichtung (Y(2)) verbunden sind, unter Verwendung von Distributed-Ledger-Technologie, wobei die erste Vorrichtung die Benutzerinformationen aufweist und die zweite Vorrichtung die Benutzerinformationen nicht aufweist, wobei:
die erste Vorrichtung (Y(1)), die mit dem Netzwerk (3) verbunden ist, dazu ausgestaltet ist, codierte Daten, die mit den Benutzerinformationen verbunden sind, an das Netzwerk (3) auszugeben, wobei die codierten Daten mit dem ersten öffentlichen Schlüssel (P₁) codiert sind, der dem ersten privaten Schlüssel (S₁) entspricht, der zum Austauschen der Benutzerinformationen verwendet wird, wobei der erste private Schlüssel (S₁) in der ersten Vorrichtung (Y(1)) gespeichert oder verwaltet wird;
jede Vorrichtung von der Vielzahl von Vorrichtungen (Y(1)-Y(N)) dazu ausgestaltet ist, die codierten Daten durch das Netzwerk (3) zum Speichern im Speicher von jeder Vorrichtung zu empfangen, wobei die gleichen codierten Daten unter der Vielzahl von Vorrichtungen (Y(1)-Y(N)) gespeichert werden;
die zweite Vorrichtung (Y(2)), die mit dem Netzwerk (3) verbunden ist, dazu ausgestaltet ist, eine Anforderung (402) zum Erfassen von Daten an das Netzwerk (3) auszugeben, wobei die Anforderung (402) der Vielzahl von Vorrichtungen (Y(1)-Y(N)) bereitgestellt wird und einen zweiten öffentlichen Schlüssel (P₃) umfasst, der einem zweiten privaten Schlüssel (S₃) für die Benutzerinformationen entspricht, und wobei der zweite private Schlüssel (S₃) in der zweiten Vorrichtung (Y(2)) gespeichert oder verwaltet wird;
die erste Vorrichtung (Y(1)) dazu ausgestaltet ist, als Reaktion auf die Anforderung (402) zum Erfassen von Daten die codierten Daten mit dem ersten privaten Schlüssel (S₁) zu entschlüsseln und anschließend zweite codierte Daten, die mit den Benutzerinformationen verbunden sind, an das Netzwerk (3) auszugeben, wobei die zweiten codierten Daten mit dem zweiten öffentlichen Schlüssel (S₃) verschlüsselt sind, der in der Anforderung (402) zum Erfassen von Daten enthalten ist;
jede Vorrichtung von der Vielzahl von Vorrichtungen (Y(1)-Y(N)) dazu ausgestaltet ist, die zweiten codierten Daten in ihrem eigenen Speicher zu speichern, wobei die gleichen zweiten codierten Daten unter der Vielzahl von Vorrichtungen (Y(1)-Y(N)) gespeichert werden; und
die zweite Vorrichtung (Y(2)) dazu ausgestaltet ist, die zweiten codierten Daten mit dem zweiten privaten Schlüssel (S₃) zu entschlüsseln, um die Benutzerinformationen zu erhalten.

7. System nach Anspruch 6, wobei jede Vorrichtung von der Vielzahl von Vorrichtungen (Y(1)-Y(N)) ausgestaltet ist zum:
Ausführen eines Hash-Algorithmus zum Validieren eines Kettenzustands von gespeicherten Daten unter Verwendung von Daten, die in ihrem eigenen Speicher gespeichert sind, und der zu speichernden zweiten codierten Daten, die mit den Benutzerinformationen verbunden sind, vor dem Speichern der codierten Daten oder der zweiten codierten Daten in ihrem eigenen Speicher; und
zusätzliches Speichern der codierten Daten oder der zweiten codierten Daten, wenn eine Schlussfolgerung gültig gemäß einem Konsensalgorithmus bestimmt wird, der unter der Vielzahl von Vorrichtungen ausgeführt wird.

8. System nach Anspruch 6 oder 7, wobei mindestens eine Vorrichtung von der Vielzahl von Vorrichtungen ferner dazu ausgestaltet ist, eine Zustimmung eines Benutzers (X(1)) der Benutzerinformationen zu einem Empfang der Benutzerinformationen an der zweiten Vorrichtung (Y(2)) anzufordern, wenn die Anforderung (402) zum Erfassen von Daten ausgegeben wird, wobei die erste Vorrichtung (Y(1)) dazu ausgestaltet ist, die Benutzerinformationen mit dem zweiten öffentlichen Schlüssel (P₃) zu verschlüsseln, nur wenn die Zustimmung bestätigt wird.

9. System nach Anspruch 6, wobei die erste Vorrichtung (Y(1)) die codierten Daten aus lokal gespeicherten persönlichen Benutzerinformationen erzeugt.

10. Erste Vorrichtung (Y(1)) zum Bereitstellen von Benutzerinformationen für eine zweite Vorrichtung (Y(2)), die die Benutzerinformationen nicht aufweist, über eine Vielzahl von Vorrichtungen (Y(1)-Y(N)), die jede einen Speicher aufweist, der mit einem Netzwerk (3) verbunden ist, unter Verwendung von Distributed-Ledger-Technologie, wobei die erste Vorrichtung (Y(1)) ausgestaltet ist zum:
Erzeugen verschlüsselter Daten, die mit Benutzerinformationen verbunden sind, unter Verwendung eines ersten öffentlichen Schlüssels (P₁), der einem ersten privaten Schlüssel (S₁) für die Benutzerinformationen entspricht, wobei der erste private Schlüssel (S₁) in der ersten Vorrichtung (Y(1)) gespeichert oder verwaltet wird;
Ausgeben der verschlüsselten Daten an das Netzwerk (3) ;
als Reaktion auf das Ausgeben einer Anforderung (402) zum Erfassen von Daten, die einen zweiten öffentlichen Schlüssel (P₃) umfassen, von der zweiten Vorrichtung (Y(2)) an das Netzwerk (3), nachdem jede Vorrichtung von der Vielzahl von Vorrichtungen (Y(1)-Y(N)), die mit dem Netzwerk (3) verbunden sind, die verschlüsselten Daten in ihrem eigenen Speicher gespeichert hat, Entschlüsseln der verschlüsselten Daten mit dem ersten privaten Schlüssel (S₁), anschließend Verschlüsseln der entschlüsselten Benutzerinformationen mit dem zweiten öffentlichen Schlüssel (P₃) in zweite codierte Daten und Ausgeben der zweiten codierten Daten, wobei der zweite öffentliche Schlüssel (P₃) einem zweiten privaten Schlüssel (S₃) entspricht, der in der zweiten Vorrichtung (Y(2)) gespeichert oder verwaltet wird.

11. Erste Vorrichtung nach Anspruch 10, wobei jede Vorrichtung von der Vielzahl von Vorrichtungen (Y(1)-Y(N)) ausgestaltet ist zum:
Ausführen eines Hash-Algorithmus zum Validieren eines Kettenzustands von gespeicherten Daten unter Verwendung von Daten, die in dem eigenen Speicher gespeichert sind, und der zu speichernden zweiten codierten Daten, die mit den Benutzerinformationen verbunden sind, vor dem Speichern der verschlüsselten Daten für die Benutzerinformationen im eigenen Speicher jeder Vorrichtung; und
zusätzlichen Speichern der codierten Daten oder der zweiten codierten Daten, wenn eine Schlussfolgerung gültig gemäß einem unter der Vielzahl von Vorrichtungen ausgeführten Konsensalgorithmus bestimmt wird.

12. Erste Vorrichtung nach Anspruch 10, die ferner umfasst:
wobei die erste Vorrichtung (Y(1)) dazu ausgestaltet ist, die Benutzerinformationen mit dem zweiten öffentlichen Schlüssel (P₃) zu speichern, nur wenn die Zustimmung von mindestens einer Vorrichtung von der Vielzahl von Vorrichtungen (Y(1)-Y(N)) bestätigt wird.

13. Erste Vorrichtung nach Anspruch 10, wobei die erste Vorrichtung (Y(1)) die codierten Daten aus lokal gespeicherten persönlichen Benutzerinformationen erzeugt.

14. Computerprogram, das in einem maschinenlesbaren Speicher oder Datenträger ausgeführt ist und das, wenn es durch eine Vielzahl von Vorrichtungen (Y(1)-Y(N)) ausgeführt wird, die mit einem Netzwerk (3) verbunden sind, die Schritte in dem Verfahren nach einem beliebigen der Ansprüche 1 bis 5 ausführt.

## Revendications

1. Procédé pour partager des informations d'utilisateur entre un premier dispositif (Y(1)) et un second dispositif (Y(2)) via une pluralité de dispositifs (Y(1)-Y(N)) ayant une mémoire connectée à un réseau (3) en utilisant une technologie de registre distribué, le premier dispositif (Y(1)) ayant les informations d'utilisateur et le second dispositif (Y(2)) n'ayant pas les informations d'utilisateur, comprenant :
le premier dispositif (Y(1)) connecté au réseau (3) sortant des données codées associées aux informations d'utilisateur sur le réseau (3), les données codées étant cryptées avec une première clé publique (P₁) correspondant à une première clé privée (S₁) pour les informations d'utilisateur, la première clé privée (S₂) étant stockée ou gérée dans le premier dispositif (Y(1)) ;
chaque dispositif de la pluralité de dispositifs (Y(1)-Y(N)) recevant par l'intermédiaire du réseau (3) les données codées à stocker dans la mémoire dudit chaque dispositif, de sorte que les mêmes données codées soient stockées parmi la pluralité de dispositifs (Y(1)-Y(N)) ;
le second dispositif (Y(2)) connecté au réseau (3) sortant une demande (402) pour acquérir des données à partir du réseau (3), la demande (402) étant fournie vers la pluralité de dispositifs (Y(1)-Y(N)) et comprenant une seconde clé publique (P₃) correspondant à une seconde clé privée (S₃) pour les informations d'utilisateur, et dans lequel la seconde clé privée (S₃) est stockée ou gérée dans le second dispositif (Y(2)) ;
en réponse à la demande pour acquérir des données, le premier dispositif (Y(1)) décryptant les données codées avec la première clé privée (S₁) et sortant par la suite une seconde donnée codée associée aux informations d'utilisateur sur le réseau (3), la seconde donnée codée étant cryptée avec la seconde clé publique (P₃) incluse dans la demande pour acquérir des données ;
chaque dispositif de la pluralité de dispositifs (Y(1)-Y(N)) stockant la seconde donnée codée dans sa propre mémoire, de sorte que la même seconde donnée codée soit stockée parmi la pluralité de dispositifs (Y(1)-Y(N)) ; et
le second dispositif (Y(2)) décryptant la seconde donnée codée avec la seconde clé privée (S₃) pour obtenir les informations d'utilisateur.

2. Procédé selon la revendication 1, dans lequel au niveau dudit chaque dispositif de la pluralité de dispositifs (Y(1)-Y(N)) sont effectués
l'exécution d'un algorithme de hachage pour valider un état de chaîne de données stockées en utilisant des données codées dans sa propre mémoire et la seconde donnée codée à stocker qui est associée aux informations d'utilisateur avant le stockage des données codées ou de la seconde donnée codée dans sa propre mémoire ; et
le stockage additionnel des données codées ou de la seconde donnée codée lorsqu'une conclusion de validité est déterminée selon un algorithme de consensus exécuté parmi la pluralité de dispositifs.

3. Procédé selon la revendication 1 ou 2, comprenant en outre :
lorsqu'une demande pour acquérir des données est sortie, au moins un dispositif de la pluralité de dispositifs (Y(1)-Y(N)) demandant un accord (405) d'un utilisateur (X(1)) des informations d'utilisateur pour une réception des informations d'utilisateur au niveau du second dispositif (Y(2)), le premier dispositif (Y(1)) étant configuré pour crypter les informations d'utilisateur avec la seconde clé publique (P₃) seulement si l'accord est confirmé.

4. Procédé selon la revendication 3, comprenant en outre :
le stockage non seulement de la seconde clé publique (P₃) mais également de l'accord avec la seconde donnée codée dans la mémoire dudit chaque dispositif de la pluralité de dispositifs (Y(1)-Y(N)).

5. Procédé selon la revendication 1, dans lequel le premier dispositif (Y(1)) génère les données codées à partir d'informations d'utilisateur personnelles stockées localement.

6. Système ayant une pluralité de dispositifs (Y(1)-Y(N)) ayant une mémoire, comprenant un premier dispositif (Y(1)) et un second dispositif (Y(2)) qui sont connectés à un réseau (3) pour partager des informations d'utilisateur entre le premier dispositif (Y(1)) et le second dispositif (Y(2)) en utilisant une technologie de registre distribué, le premier dispositif ayant les informations d'utilisateur et le second dispositif n'ayant pas les informations d'utilisateur, dans lequel :
le premier dispositif (Y(1)) connecté au réseau (3), configuré pour sortir des données codées associées aux informations d'utilisateur sur le réseau (3), les données codées étant cryptées avec la première clé publique (P₁) correspondant à la première clé privée (S₁) qui est utilisée pour échanger les informations d'utilisateur, la première clé privée (S₁) étant stockée ou gérée dans le premier dispositif (Y(1)) ;
chaque dispositif de la pluralité de dispositifs (Y(1)-Y(N)) configuré pour recevoir par l'intermédiaire du réseau (3) les données codées à stocker dans la mémoire dudit chaque dispositif, les mêmes données codées étant stockées parmi la pluralité de dispositifs (Y(1)-Y(N)) ;
le second dispositif (Y(2)) connecté au réseau (3) configuré pour sortir une demande (402) pour acquérir des données sur le réseau (3), la demande (402) étant fournie vers la pluralité de dispositifs (Y(1)-Y(N)) et comprenant une seconde clé publique (P₃) correspondant à une seconde clé privée (S₃) pour les informations d'utilisateur, et la seconde clé privée (S₃) étant stockée ou gérée dans le second dispositif (Y(2)) ;
en réponse à la demande (402) pour acquérir des données, le premier dispositif (Y(1)) configuré pour décrypter les données codées avec la première clé privée (S₁) et sortir par la suite une seconde donnée codée associée aux informations d'utilisateur sur le réseau (3), la seconde donnée codée étant cryptée avec la seconde clé publique (S₃) incluse dans la demande (402) pour acquérir des données ;
chaque dispositif de la pluralité de dispositifs (Y(1)-Y(N)) étant configuré pour stocker la seconde donnée codée dans sa propre mémoire, la même seconde donnée codée étant stockée parmi la pluralité de dispositifs (Y(1)-Y(N)) ; et
le second dispositif (Y(2)) étant configuré pour décrypter la seconde donnée codée avec la seconde clé privée (S₃) pour obtenir les informations d'utilisateur.

7. Système selon la revendication 6, dans lequel chaque dispositif de la pluralité de dispositifs (Y(1)-Y(N)) est configuré pour
exécuter un algorithme de hachage pour valider un état de chaîne de données stockées en utilisant des données stockées dans sa propre mémoire et la seconde donnée codée à stocker qui est associée aux informations d'utilisateur avant le stockage des données codées ou de la seconde donnée codée dans sa propre mémoire ; et
stocker additionnellement les données codées ou la seconde donnée codée lorsqu'une conclusion de validité est déterminée selon un algorithme de consensus exécuté parmi la pluralité de dispositifs.

8. Système selon les revendications 6 ou 7, dans lequel au moins un dispositif de la pluralité de dispositifs est en outre configuré pour demander un accord d'un utilisateur (X(1)) des informations d'utilisateur pour une réception des informations d'utilisateur au niveau du second dispositif (Y(2)) lorsque la demande (402) pour acquérir des données est sortie, dans lequel le premier dispositif (Y(1)) est configuré pour crypter les informations d'utilisateur avec la seconde clé publique (P₃) seulement si l'accord est confirmé.

9. Système selon la revendication 6, dans lequel le premier dispositif (Y(1)) génère les données codées à partir d'informations d'utilisateur personnelles stockées localement.

10. Premier dispositif (Y(1)) pour fournir des informations d'utilisateur à un second dispositif (Y(2)) n'ayant pas les informations d'utilisateur via une pluralité de dispositifs (Y(1)-Y(N)) ayant chaque mémoire connectée à un réseau (3) en utilisant une technologie de registre distribué, le premier dispositif (Y(1)) configuré pour :
générer des données cryptées associées à des informations d'utilisateur en utilisant une première clé publique (P₁) correspondant à une première clé privée (S₁) pour les informations d'utilisateur, dans lequel la première clé privée (S₁) est stockée ou gérée dans le premier dispositif (Y(1)) ;
sortir les données cryptées sur le réseau (3) ;
en réponse au fait de sortir une demande (402) pour acquérir des données incluant une seconde clé publique (P₃) à partir du second dispositif (Y(2)) sur le réseau (3) après que chaque dispositif de la pluralité de dispositifs (Y(1)-Y(N)) connectés au réseau (3) a stocké les données cryptées dans sa propre mémoire, décrypter les données cryptées avec la première clé privée (S₁), crypter par la suite les informations d'utilisateur décryptées avec la seconde clé publique (P₃) en une seconde donnée codée et sortir la seconde donnée codée, la seconde clé publique (P₃) correspondant à une seconde clé privée (S₃) stockée ou gérée dans le second dispositif (Y(2)).

11. Premier dispositif selon la revendication 10, dans lequel ledit chaque dispositif de la pluralité de dispositifs (Y(1)-Y(N)) est configuré pour
exécuter un algorithme de hachage pour valider un état de chaîne de données stockées en utilisant des données stockées dans la propre mémoire et la seconde donnée codée à stocker qui est associée aux informations d'utilisateur avant le stockage des données cryptées pour les informations d'utilisateur dans sa propre mémoire dudit chaque dispositif ; et
stocker additionnellement les données codées ou la seconde donnée codée lorsqu'une conclusion de validité est déterminée selon un algorithme de consensus exécuté parmi la pluralité de dispositifs.

12. Premier dispositif selon la revendication 10, comprenant en outre :
dans lequel le premier dispositif (Y(1)) est configuré pour crypter les informations d'utilisateur avec la seconde clé publique (P₃) seulement si l'accord est confirmé depuis au moins un dispositif de la pluralité de dispositifs (Y(1)-Y(N)).

13. Premier dispositif selon la revendication 10, dans lequel le premier dispositif (Y(1)) génère les données codées à partir d'informations d'utilisateur personnelles stockées localement.

14. Programme informatique incorporé dans une mémoire ou un support lisible par ordinateur qui, lorsqu'il exécuté par une pluralité de dispositifs (Y(1)-Y(N)) connectés à un réseau (3), exécute les étapes dans le procédé selon l'une quelconque des revendications 1 à 5.
